(19) Europäisches Patentamt
European Patent Office
Office européen des brevets

(11) **EP 3 230 714 B1**

(12) **EUROPEAN PATENT SPECIFICATION**

(45) Date of publication and mention
of the grant of the patent:
**12.07.2023  Bulletin 2023/28**

(21) Application number: **15866433.4**

(22) Date of filing: **08.12.2015**

(51) International Patent Classification (IPC):
**G01N 21/03** (2006.01)      **B05D 5/06** (2006.01)
**B01L 3/00** (2006.01)      **G01N 21/11** (2006.01)

(52) Cooperative Patent Classification (CPC):
**G01N 21/03; B01L 3/502746; B01L 3/502753;
G01N 21/11;** B01L 2300/0681; B01L 2400/0406;
B01L 2400/086; G01N 2021/0346; G01N 2021/115

(86) International application number:
**PCT/AU2015/000738**

(87) International publication number:
**WO 2016/090407 (16.06.2016 Gazette 2016/24)**

(54) **CUVETTE FOR OPTICAL SPECTROSCOPY**

**KÜVETTE FÜR OPTISCHE SPEKTROSKOPIE**

**CUVETTE POUR SPECTROSCOPIE OPTIQUE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **10.12.2014  AU 2014905004**

(43) Date of publication of application:
**18.10.2017  Bulletin 2017/42**

(73) Proprietor: **University Of South Australia
Adelaide, SA 5000 (AU)**

(72) Inventors:
• **PRIEST, Craig Ian
   Athelstone, South Australia 5076 (AU)**
• **KRIEL, Frederick Hermanus
   Thornton, NSW 2322 (AU)**
• **HOLZNER, Gregor
   Lana 39011 (IT)**

(74) Representative: **FRKelly
   27 Clyde Road
   Dublin D04 F838 (IE)**

(56) References cited:
WO-A2-2012/024006      US-A1- 2004 125 266
US-A1- 2006 289 787      US-A1- 2012 105 841
US-A1- 2013 183 540

• **ISHINO C ET AL: "Wicking within forests of
   micropillars", EUROPHYSICS LETTERS: A
   LETTERS JOURNAL EXPLORING THE
   FRONTIERS OF PHYSICS, INSTITUTE OF
   PHYSICS PUBLISHING, BRISTOL, FR, vol. 79, no.
   5, 1 September 2007 (2007-09-01), page 56005,
   XP020115528, ISSN: 0295-5075, DOI:
   10.1209/0295-5075/79/56005**
• **SEMPREBON C. ET AL.: 'Pinning and wicking in
   regular pillar arrays' SOFT MATTER vol. 10, 16
   May 2014, pages 5739 - 5748, XP055453551**
• **TRONG T. M. ET AL.: 'Dynamics of Wicking in
   Silicon Nanopillars Fabricated with Interference
   Lithography and Metal-Assisted Chemical
   Etching' LANGMUIR vol. 28, 11 July 2012, pages
   11465 - 11471, XP055453557**
• **XIE C. ET AL.: 'Vertical nanopillars for highly
   localized fluorescence imaging' PNAS vol. 108,
   no. 10, 08 March 2011, pages 3894 - 3899,
   XP055453559**

EP 3 230 714 B1

**Description**

**PRIORITY DOCUMENT**

The present application claims priority from Australian Provisional Patent Application No. 2014905004 titled "CUVETTE FOR OPTICAL SPECTROSCOPY" and filed on 10 December 2014.

**TECHNICAL FIELD**

The present disclosure relates to cuvettes for use in spectroscopy, such as UV or visible spectroscopy.

**BACKGROUND**

Optical spectroscopy is used to measure the absorption, fluorescence, phosphorescence, scattering, emission or chemiluminescence of liquid samples in various research and analytical fields. For example, in absorption spectroscopy the optical absorption spectra of liquid substances and mixtures are measured. Optical spectroscopy offers a fast and reliable analytical technique and can now be achieved using compact and relatively inexpensive instruments in remote locations.

In a simple spectrophotometer, the sample substance which is to be studied, usually a liquid, is placed into a transparent container, generally known as a cuvette or sample cell. Collimated light of a known wavelength (e.g. ultraviolet, infrared, visible, etc.) and intensity $I_0$, is incident on one side of the cuvette. A detector, which measures the intensity of the exiting light, $I$, is placed on the opposite side of the cuvette (in the case of transmission spectroscopy) or on the same side of the cuvette (in the case of reflection spectroscopy). Independent of the cuvette design, the measured absorbance, $A$, increases linearly with analyte concentration, $[X]$, over a specific concentration range according to the Beer-Lambert relationship:

$$A = -\log\left(\frac{I}{I_0}\right) = \varepsilon \cdot h \cdot [X] \qquad (1)$$

where $I_0$ and $I$ are the intensities of incident and transmitted light ($\frac{I}{I_0}$ is the transmittance $T$), $\varepsilon$ is the molar absorptivity, and $h$ is the path length of the sample. Path lengths ($h$) in cuvettes are normally between 1 and 100 mm, typically 10mm or 2 mm. At high concentration, the relationship $A \propto [X]$ departs from linearity until the absorbance reaches a plateau. This limit is influenced by the magnitude of $\varepsilon$, which varies greatly for different analytes. In some cases $\varepsilon$ is very large, such as for example for blood[1], chlorophyll[2,3], inks[4] and sensitizers[5]. Wherever the magnitude of $\varepsilon$ and/or $[X]$ is large, it is necessary to reduce $h$ and/or dilute the sample before measurement. The latter is highly undesirable, as it is laborious, time-consuming, and a possible source of error, particularly where sample preparation is remotely carried out by unskilled personnel.

Furthermore, these spectrometric techniques are limited for valuable samples (e.g. biological samples) because the cuvettes typically used generally require a minimum of 1 mL sample, which is typically discarded after measurement. Large sample volume and loss is problematic for valuable biological samples which may be present in limited quantities.

For analysis of fluids of limited volume (e.g. less than 10 μL) or fluids of high value (e.g. biological samples which may be present in limited quantities), it is desirable to keep the sample volume required for spectroscopic analysis low. As sample volume decreases, it becomes more difficult to apply a sample into a measurement area of a cuvette without generating air bubbles, or sectioned liquid spots, leading to errors. Micro-cuvettes can be used for microlitre samples, but they are not easy to use because they can be difficult to fill and rinse. Known cuvettes that use capillarity for filling also suffer from difficulties with rinsing. Other cuvettes use injection of liquid, which allows rinsing, but requires filling of a syringe and displacement of connecting tubing with dead volume. So-called "cuvetteless sampling" is an alternative technique that has been used with very small sample volumes. In cuvetteless sampling, a narrow beam of light is directed to a sample stage that consists of a 1 to 2 μL liquid droplet suspended between two multi-mode optical fibres, one source-side fibre which provides light from a light source to the droplet and a detection-side fibre that guides light from the droplet to appropriate detection optics. The close proximity between the source-side and detection-side fibres allows enough of the light cone emanating from the source-side fibre to be collected by the detection-side fibre after passing through a liquid sample. These cuvetteless instruments typically require a clamping surface that can be wetted with sample to avoid an air-bubble interface. However, adding a small amount of sample (typically 5 μL) to the centre of the clamping surface is a complicated lab technique and carry-over contamination resulting from failure to completely remove previous samples is a frequent source for error.

Semprebon, Ciro, et al. Soft Matter 10.31 (2014): 5739-5748 investigated pinning and wicking of a liquid meniscus in a square array of pillars in numerical energy minimizations and compared to wetting experiments. The study showed that criteria for spontaneous film formation, based on thermodynamic considerations as well as on simple geometric modelling of the meniscus shape, are insufficient to predict the onset of wicking.

Mai, Trong Thi, et al. Langmuir 28.31 (2012): 11465-11471 undertook a theoretical study on the dynamics of wicking on silicon nano-pillars based on a balance between the driving capillary forces and viscous dissipation forces.

United States Patent Application Publication No. 2006/0289787 A1 relates to an optical reader (33, 43, 53, 63, 73, 83) for an optical assay arrangement comprising a polymeric sample substrate (1) having a reaction site-area (5) provided with protruding microstructures (2), the optical reader comprising a light source (6,11) for illuminating the reaction site-area (5), and a detector device (7,12) for detecting light emitted from said reaction site-area.

There is a need for reliable techniques for the analysis of very small volume samples using various methods of optical spectroscopy. This is particularly true in the case of biochemical analysis, pharmaceutical screening, forensics and medical diagnostics.

Furthermore, the demand for fast, straight-forward, and inexpensive analytical methods for unskilled users is growing rapidly, driven by the convergence of innovation in portable electronics, data analysis, and microfluidics/lab-on-a-chip technology. Taking the laboratory to the sample in a compact and inexpensive device has major advantages, including short analysis-to-action turn-around times. Applications in security[6], health monitoring[7], environmental detection[8], and process control in industry[9] are a few examples where rapid on-site analysis is highly desirable. In these examples, sample preparation must not be laborious or time-consuming and conventional laboratory tasks, such as dilution, are a source of error and often impractical.

There is a need for cuvettes that are suitable for use in dilution-free spectroscopic analysis of small volume samples, such as high $\varepsilon$ or [X] samples or valuable samples.

## SUMMARY

We have developed a cuvette that permits dilution-free spectroscopic analysis of samples with high molar absorptivity, such as pigments and high concentration metal solutions, such as hexachloroplatinate ($PtCl_6^{2-}$), potassium permanganate, methyl orange, and food dyes.

According to a first aspect, there is provided a cuvette for optical spectroscopy according to claim 1.

Specifically, we have developed a pillar based cuvette that is spontaneously and precisely filled by capillarity to yield a reproducible optical path length of tens of micrometres. Only one droplet (~ 2 $\mu$L) of analyte solution is required.

In certain embodiments of the first aspect, the pillars and/or the substrate are optically transparent in the spectral region. In these embodiments, the cuvette is particularly suitable for transmission spectroscopy.

In certain embodiments of the first aspect, the pillars in the array in the spectral region of the substrate extend substantially orthogonally from the surface of the substrate.

In certain embodiments of the first aspect the pillars (18) are transparent or semi-transparent, wherein for the semi-transparent pillars $T_p$=0.6. In certain embodiments of the first aspect the pillars (18) are opaque and wherein for the opaque pillars $T_p$=0.

The pillars can be any shape in cross section, such as square, round, elliptical, hexagonal, etc. In certain embodiments, the pillars are circular in cross section. In other certain embodiments, the pillars are square in cross section.

The array of pillars may be an ordered array in which the dimensions of the pillars and hence the interpillar spacings are substantially uniform in the array or, alternatively, the array may be a disordered array in which the dimensions other than the height of the pillars and hence the interpillar spacings are non-uniform in the array.

In certain embodiments of the first aspect, the height of each pillar is about 10 micrometres. In other specific embodiments, the height of each pillar is about 20 micrometres.

In certain embodiments of the first aspect in which the pillars are circular in cross section, the diameter of each pillar is about 10 micrometres.

In certain embodiments of the first aspect, the distance between adjacent pillars is from about 0.1 micrometres to about 250 micrometres.

In certain embodiments of the first aspect, the surface area fraction of the pillars is about 0.05, about 0.10, about 0.20 or about 0.30. In certain embodiments of the first aspect, an *h/w* aspect ratio of the pillars is between about 1 and about 2.6.

Optionally, a surface of the substrate and/or pillars that comes into contact with the analyte solution further comprises a functional coating that is able to react or bind with an analyte or release a species to generate or enhance an optical signal.

Advantageously, the dimensions of the interpillar spacings may be suitable for filtering particulates from the analyte sample. In certain embodiments of the first aspect, the cuvette has an open structure, which allows for quick and easy rinsing between samples.

In certain embodiments of the first aspect, the cuvette is suitable for use in transmission spectroscopy and the pillars and/or the substrate is/are optically transparent in the spectral region so that light from a light source on one side of the cuvette is transmitted through the cuvette (and the sample) and the transmitted light is detected by a detector on another side of the cuvette. In these embodiments, the cuvette may for example be used in an optical spectrometer with incident light directed parallel to the pillars. As mentioned previously, the optical path length is defined by the height of the pillars in the spectral region. However, the cuvette is not limited to that specific use and can also be used in reflection spectroscopy in which the light source and the detector of the spectrometer are each on the same side of the cuvette. In either case, the angle of incident and transmitted light may be from 0 degrees to 90 degrees.

For use in optical transmission spectroscopy, the pillars do not need to be optically transparent and they can be semi-transparent or opaque but the substrate will usually be transparent.

The incident light could also be directed orthogonal to the pillars.

In certain embodiments, the dimensions of the interpillar spacings are suitable for filtering particulates from the analyte sample. In this way, a drop of an analyte sample containing particulate material can be placed on the analyte solution loading region with the droplet in fluid contact with the wicking structure and the analyte solution is allowed to disperse into the wicking structure but at least some of the particulate material is unable to pass through the interpillar spacings and is, therefore, filtered from the sample in the spectral region of the cuvette.

According to a third aspect, there is provided an optical spectroscopic method comprising:

- providing a cuvette according to the first aspect;
- contacting a droplet of an analyte solution to be analysed by optical spectroscopy with part of the open wicking structure of the cuvette under conditions to fill the interpillar spacings in the spectral region with the analyte solution to provide a filled cuvette;
- exposing a first side of the filled cuvette to a light source such that an incident light beam is projected through the spectral region of the cuvette to a detector located at a second side of the filled cuvette that is opposite the first side; and
- measuring at least one parameter of the light at the detector.

According to a fourth aspect, there is provided a process for producing a glass or quartz cuvette for optical absorption spectroscopy according to the first aspect, the process comprising:

- providing a substrate;

- forming an array of pillars extending from a planar surface of the substrate with each pillar in the array being of substantially equal height, wherein the height ($h$) of each pillar (18) is from about 0.1 micrometre to about 500 micrometres; wherein the diameter ($w$) of each pillar (18) is from about 0.1 micrometres to about 100 micrometres; wherein the surface area fraction ($\phi$) of the pillars (18) is from about 0.01 to about 0.50; and

- forming an analyte solution loading region on the substrate, the analyte solution loading region configured to receive a droplet of an analyte solution such that the droplet is in fluid contact with the array of pillars such that the analyte solution is dispersed within the array of pillars.

In certain embodiments of the fourth aspect, the array of pillars is formed by

- forming a template on the surface of the substrate to give a templated substrate;

- etching the templated substrate under conditions to form an array of pillars extending from a planar surface of the substrate with each pillar in the array being of substantially equal height.

In these embodiments, the templated substrate can be formed by coating a surface of the substrate with a photoresist layer, exposing the photoresist layer to UV radiation through a patterned photomask to form a patterned template on the surface of the substrate.

Pillar arrays could also be directly stamped or moulded into a substrate, or a photoresist could be directly used as the pillars.

**BRIEF DESCRIPTION OF THE FIGURES**

Embodiments of the present disclosure will be discussed with reference to the accompanying figures wherein:

Figure 1 shows: (a) a plot of critical contact angle predicted by Equation 1 against projected area fraction pillars with heights from 5 to 50 $\mu$m; (b-c) experimental wicking results for (b) $h_n$= 10 $\mu$m and (c) $h_n$= 20 $\mu$m. The crosses and circles represent wicking and non-wicking events. The solid line is calculated using Equation 2, see frame (a) also;

Figure 2 shows: cross-section of the pillar cuvette loaded with the reference solution and the sample shown separate for clarity;

Figure 3 shows scanning electron microscopy images of 20 $\mu$m high pillars for $\phi$ = 0.05 (i), 0.10 (ii), 0.20 (iii), and 0.30 (iv) array. Etching defects appear between the pillars as the lattice spacing decreases;

Figure 4 shows (a) UV-Vis measurement method using the pillar cuvette; and (b) an image showing a droplet of aqueous sample in contact with a pillar array, in which a thin film ($h_n$ = 10 $\mu$m) has spontaneously formed. To the left is an empty pillar array for comparison;

Figure 5 shows the results of optical profilometry of the liquid (aqueous sample)-vapour interface at the tops of the pillars for $h_n$ = 10 $\mu$m: (a) $\phi$ = 0.05 and (b) $\phi$ = 0.20. The curvature of the meniscus between the pillars is negligible in both cases; (c) Profiles of pillar arrays before and after filling with the liquid sample. The scale bar is 20 $\mu$m;

Figure 6 shows absorbance spectra for (a) pillar cuvettes at different $\phi$ (area fraction) with and without 0.5 M $HCl_{(aq)}$, and (b) for solvents with different refractive indices;

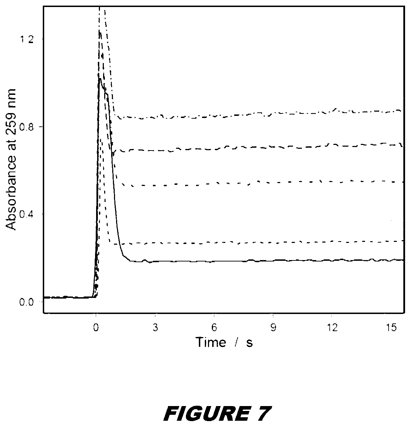

Figure 7 shows absorbance versus time for $PtCl_6^{2-}{}_{(aq)}$ concentrations from 0.5 to 10 g/L measured in a pillar cuvette ($\phi$ = 0.05; $h_n$ = 13.3 $\mu$m);

Figure 8 shows plots of absorbance against $PtCl_6^{2-}{}_{(aq)}$ concentration measured in cuvettes with opaque pillars (see Table 1): (a) absorbance, A, and (b) absorbance normalized by the path length, A*;

Figure 9 shows plots of (a) absorbance, A, and (b) absorbance normalized to the path length, A*, at 259 nm for $PtCl_6^{2-}{}_{(aq)}$ standard solutions in pillar cuvettes with semitransparent pillars; and

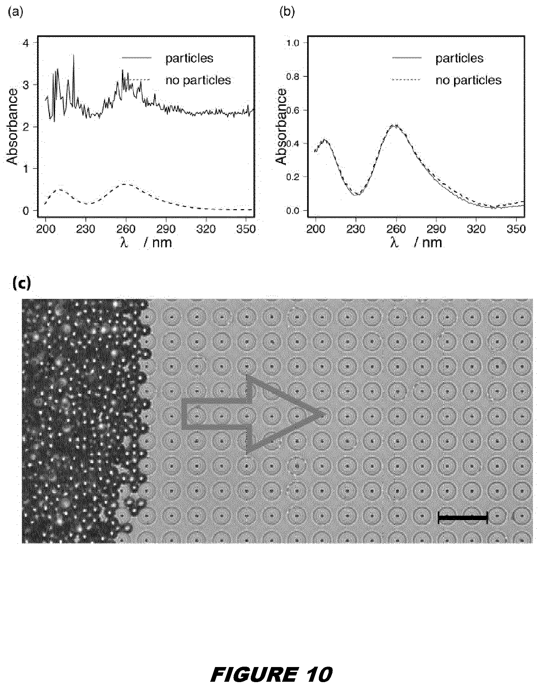

Figure 10 shows (a) UV-Vis spectra of a 30 ppm $PtCl_6^{2-}$ solution collected using a conventional 2 mm cuvette, with (solid line) and without (dashed line) 6 $\mu$m polystyrene spheres present. The particles distort the spectrum greatly. (b) UV-Vis spectra of a 3 g/L $PtCl_6^{2-}$ solution collected using a pillar cuvette ($h$ = 5 $\mu$m; $\phi$ = 0.40) with (solid line) and without (dashed line) 6 $\mu$m polystyrene particles present. The very good agreement shows that particles do not interfere with the analysis because the particles are filtered in-situ by the pillar array during cuvette filling, see frame (c). (c) Microscopy showing the 6 $\mu$m particles (green spheres to the left hand side) being filtered during filling of the pillar cuvette. The particle-free liquid film used for spectroscopy is located on the right hand side. The scale bar is 28 $\mu$m.

## DESCRIPTION OF EMBODIMENTS

Provided herein is a cuvette for optical spectroscopy. As used herein, the term "cuvette" means a device designed to hold samples for spectroscopic experiments. Cuvettes are also commonly referred to as "cells" or "sample cells" and the term cuvette used herein is intended to include within its scope cells and sample cells. Prior art cuvettes are typically in the form of small tubes that are circular or square in cross section and sealed at one end to contain a fluid sample to be analysed. These cuvettes are normally optically transparent on opposite sides so that a single beam of light is able to pass therethrough when used for transmission spectroscopy.

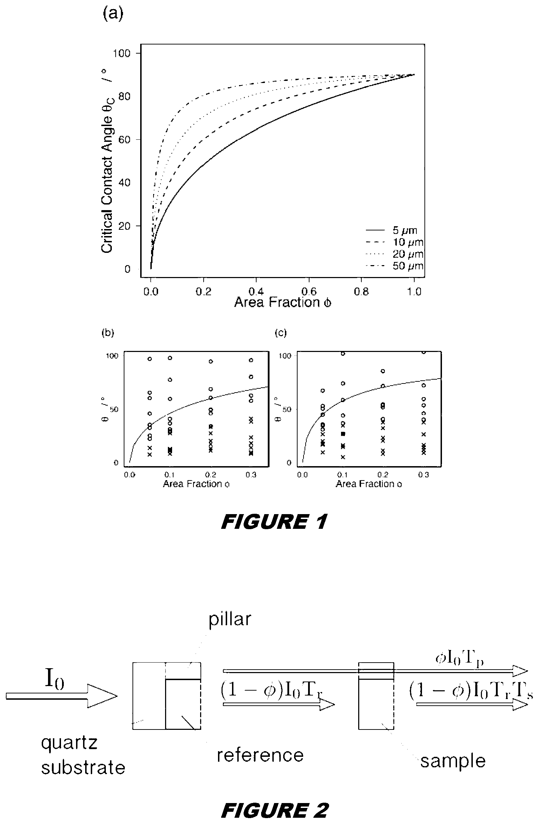

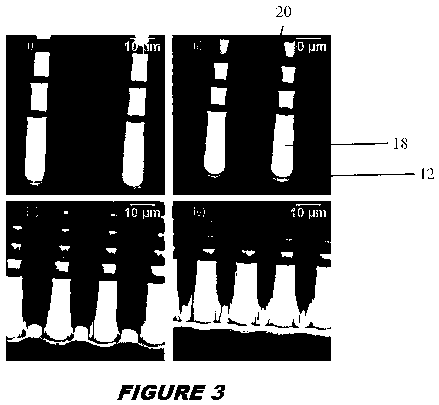

In contrast to prior art cuvettes and with reference to Figures 2 and 3, the cuvette 10 described herein comprises a substrate 12 and a wicking structure 14 forming a spectral region 16 on the substrate 12. The wicking structure 14 comprises an array of pillars 18 extending from a planar surface of the substrate with each pillar 18 in the array being of substantially equal height in the spectral region 16. The wicking structure 14 is configured such that the interpillar spacings 20 are filled with an analyte solution 22 by capillary action when the solution is placed in contact with part of the wicking structure to thereby form a spectral sample of the analyte solution in the interpillar spacings suitable for optical spectroscopy.

The cuvettes described herein can be used for any form of optical spectroscopy, including "reflectivity", "absorbance", "transmission", and "fluorescence" spectroscopy. For ease of description, further reference will be made to the use of the cuvettes in UV and visible (UV-Vis) spectroscopy. However, it will be appreciated that the cuvettes are not limited to that particular spectroscopic use and they can equally be used in other spectroscopic techniques.

The substrate and pillars of the cuvette are formed from glass or quartz. For use in optical transmission spectroscopy, the pillars can be optically transparent, semi-transparent or opaque and the substrate is transparent.

For opaque pillars, an optically transparent substrate including glasses such as borosilicate glass, fused silica, quartz, soda lime, and silicate glass can be first coated with a thick layer of an opaque material and the pillars then formed by etching. Suitable opaque materials include any opaque metal, such as Cr, Pt, Au, Ti, $Ti_2O$, Ag and/or Cu that can be sputter coated onto the substrate. An opaque polymer that can be sputtered could be used. Alternatively, still, the pillars can be painted or stamped with any opaque paint or ink.

Optionally, a surface of the substrate and/or pillars that is in contact with the analyte solution may have a functional coating that is able to react, bind or release a species to generate or enhance an optical signal. For example, a coating comprising an antibody, protein, peptide, small molecule, metal ion, metal complex or the like may be formed on the surface of the pillars and substrate and may bind a molecule or analyte of interest in the analyte solution, which binding is then qualitatively or quantitatively detected using optical spectroscopy. For example, the cuvette may be used to measure antibody-antigen binding wherein the analyte solution is suspected of containing either the antibody or the antigen. The binding can then be measured or detected by absorption, transmittance, reflection or fluorescence spectroscopy. The analyte of interest can be any atom, chemical, molecule, compound, composition or aggregate of interest for detection and/or identification, such as an amino acid, peptide, polypeptide, protein, glycoprotein, lipoprotein, nucleoside, nucleotide, oligonucleotide, nucleic acid, sugar, carbohydrate, oligosaccharide, polysaccharide, fatty acid, lipid, hormone, metabolite, cytokine, chemokine, receptor, neurotransmitter, antigen, allergen, antibody, substrate, metabolite, cofactor, inhibitor, drug, pharmaceutical, nutrient, prion, toxin, poison, explosive, pesticide, chemical warfare agent, biohazardous agent, radioisotope, vitamin, heterocyclic aromatic compound, carcinogen, mutagen, narcotic, amphetamine, barbiturate, hallucinogen, waste product and/or contaminant. The coating can be formed on the substrate and/or pillars by any suitable method, such as physical adsorption, self-assembly, chemical reaction on the surface from solution or vapour, plasma deposition, atomic layer deposition, electrostatic adsorption, etc. For example, a quartz substrate can be chemically modified by silanization using an alkylsilane in which the tail of the silane contains the appropriate chemical/biological functionality.

The cuvette described herein takes advantage of'wicking', which is the spontaneous imbibition of liquid into a small porous structure via capillarity.[11] Taking into account the surface energy and geometry of the solid-liquid, solid-vapour, and liquid-vapour interfaces involved and ignoring gravity (assuming that the parent droplet is smaller than the capillary length), wicking can be thermodynamically predicted for regular arrays of pillars, such as those found in the cuvettes described herein:

$$cos\theta > \frac{1-\phi}{r-\phi} \qquad (2)$$

In Equation 2, $\theta$ is the contact angle measured on a flat substrate of the same material, or 'material contact angle', r is the Wenzel[12] roughness factor (e.g., $r = 1 + \frac{h}{w}4\phi$ for cylindrical pillars), and $\phi$ is the projected surface area fraction of the pillars (e.g., $\phi = \frac{\pi}{4}\frac{w^2}{d^2}$ for cylindrical pillars).[11] In practice, Equation 2 is only able to inform when wicking is not possible, $cos\theta < \frac{1-\phi}{r-\phi}$, as pinning effects are caused by energy barriers that oppose the wicking effect, as described elsewhere[13]. For pillars with square and circular cross-sections, these pinning effects shift the wicking criterion to larger $\frac{h}{w}$ and $\frac{w}{d}$, and, unexpectedly, wicking is prevented again for square cross-section pillars at very high area fraction $\phi$.[13] For these reasons, the pillars in the ordered array are preferably cylindrical pillars of uniform dimensions.

Clean quartz is completely wetted by water and most other solvents in air, such that the material contact angle is intrinsically small. However, high-energy surfaces are readily contaminated in air, which raises the material contact angle and could prevent wicking altogether in practical applications. Figure 1 (a) plots the critical contact angle predicted by Equation 2 against the area fraction of the pillars for different pillar heights. Note that wicking is encouraged by increasing the height of the pillars. Experimental results for water on quartz pillar cuvettes exposed to ambient laboratory conditions or, in selected cases, hydrophobization are shown in Figure 1(b-c). The results are in qualitative agreement with previous observations by Semprebon et al.[13] who showed that pinning plays a major role in determining the critical contact angle for wicking. To compensate for pinning effects, lower contact angles than those predicted by Equation 2 are required. Figure 1(b-c) indicates that filling of cuvettes with $\phi$ = 0.05 and $h_n$ = 10 $\mu$m would be less reliable than the other arrays studied because the material contact angle must be less than ~ 20° for wicking to occur. Thus, both the pillar height, lattice spacing, and material contact angle of the pillar array is important for reliable operation of the pillar cuvette.

In practice, the height ($h_n$) of each pillar in the array is from about 0.1 micrometres to about 500 micrometres, such as from about 0.1 micrometres to about 100 micrometres. As described earlier, the pillar height ($h_n$) and surface area fraction of the pillars ($\phi$) need to be considered together in order to effectively achieve wicking. Thus, for example, for arrays having a surface area fraction of the pillars ($\phi$) of at least about 0.05 and diameter 10 micrometres, the height of each pillar in the ordered array may be at least about 10 micrometres, such as about 10 micrometres or about 20 micrometres. The term "substantially" as used herein with respect to the height of the pillars means that said dimension(s) for all pillars in the spectral region are within $\pm5\%$, $\pm4\%$, $\pm3\%$, $\pm2\%$ or $\pm1\%$ of one another.

In the illustrated embodiments, the pillars in the array in the spectral region of the substrate extend substantially orthogonally from the surface of the substrate. As described in more detail later, the height of the pillars determines the path length of the sample because the height of the pillars determines the "depth" of the analyte sample in the interpillar spacings. In the case where the cuvette is used in transmission spectroscopy and the direction of the incident light is orthogonal to the substrate (or parallel to the length of the pillars) the path length is substantially the same as the height of the pillars. In the case where the cuvette is used in reflective spectroscopy and the direction of the incident light is orthogonal to the substrate (or parallel to the length of the pillars) the path length is substantially double the height of the pillars.

Whilst the illustrated embodiments provide examples in which the direction of the incident light is orthogonal to the substrate, the angle of incident light could be anywhere from 0 degrees to 90 degrees. For example, the direction of the incident light may be 0 degrees in which case is it parallel to the surface of the substrate and the incident light passes through the array of pillars in a direction orthogonal to the height of the pillars. Alternatively, the direction of the incident light may be, for example, 45 degrees to the substrate. This may be particularly suitable for reflective spectroscopy.

In the illustrated embodiments, the pillars are circular in cross section. However, in practice the pillars can be any shape in cross section, such as square, round, elliptical, hexagonal, etc. The diameter of each pillar can be from about 0.1 micrometres to about 100 micrometres, such as about 10 micrometres.

The array of pillars may be an ordered array in which the dimensions of the pillars and hence the interpillar spacings are substantially uniform in the array or, alternatively, the array may be a disordered array in which the dimensions other than the height of the pillars and hence the interpillar spacings are non-uniform in the array.

In use, the interpillar spacings between adjacent pillars are filled with analyte sample in the spectral region. In the illustrated embodiments in which the array is an ordered array the interpillar spacings are substantially equidimensional which means that each interpillar spacing has substantially the same height (i.e. depth) and width as each other interpillar spacing in the ordered array. The dimensions of the interpillar spacings are determined by the height, diameter and surface area fraction of the pillars.

According to the invention, the surface area fraction of the pillars ($\phi$) is from about 0.01 to about 0.50, such as 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, 0.49 or 0.50. In specific embodiments, the surface area fraction of the pillars is from about 0.05, about 0.10, about 0.20 or about 0.30.

In deriving the Beer-Lambert law relationship for a sample that has pillars embedded in a thin liquid film, Absorbance, $A$, is defined as

$$A = -\log T \qquad (3)$$

where the transmittance $T = {}^{I}\!/_{I_0}$ and $I$ and $I_0$ are the intensities of the transmitted and incident light (see also eq 1). To consider the absorbance measured against a reference sample (or 'blank'), first consider the pillar cuvette filled with the reference solution, as shown in Figure 2. The incident light, $I_0$, is effectively divided into two light paths: one through the pillars and one between the pillars through the solution. The portion of light in each path is related to the area fraction of pillars, so that the incident intensity for the pillars and the reference solution are given by $\phi I_0$ and $(1 - \phi)I_0$, respectively. The quartz substrate (excluding the pillars) can be ignored, since it is optically homogeneous (equivalent to the optical window of a conventional cuvette). It follows that the transmitted intensities for the pillars, $I_p$, and the reference solution, $I_r$, are given by:

$$I_p = \phi I_0 T_p \qquad\qquad (4)$$

$$I_r = (1 - \phi)I_0 T_r \qquad\qquad (5)$$

When the sample is loaded, it attenuates the light that is able to pass through the reference sample, $I_r$ according to the transmittance of the sample, $T_s$:

$$I_s = (1 - \phi)I_0 T_r T_s \qquad\qquad (6)$$

and, therefore, the overall measured transmittance, $T_m$, is

$$T_m = \frac{I_p + I_s}{I_p + I_r} = \frac{\phi T_p + (1-\phi)T_r T_s}{\phi T_p + (1-\phi)T_r} \qquad\qquad (7)$$

Equation 7 is unusual in that $T_p$ and $T_r$ are relevant to the measurement, despite being included in the spectrum of the blank. This is due to the different transmitted intensities in the two light paths (pillars and reference solution), coupled with only one path being affected when the sample is loaded. Furthermore, light that travels to the detector without passing through the sample is generally termed 'stray light' and is undesirable for analysis of high absorbance samples. The 'stray light' effect can be avoided, by preparing opaque pillars, i.e. $T_p = 0$, which recovers $T_m = T_s$ and, thus, the traditional Beer-Lambert law:

$$A_s = -\log T_s = \varepsilon \cdot h \cdot [X] \qquad\qquad (8)$$

For pillar cuvettes where $T_p \neq 0$, the transmittance of the pillars and reference solution are both required to calculate $T_s$ from $T_m$. Given that the optical properties of the pillar material (quartz in the experiments presented here) and the reference solution are typically known (or can be easily determined), this is not a major barrier to the use of cuvettes with transparent pillars for absorbance spectroscopy.

The cuvettes described herein can be formed by providing a substrate. A template is then formed on the surface of the substrate to give a templated substrate having a template pattern that reflects desired pattern of pillars in the array. For example, the template pattern may be in the form of a regular or ordered array of circular voids, with each void having a diameter approximately equivalent to the desired diameter of the pillars. The templated substrate is then etched under conditions to form the ordered array of pillars extending substantially orthogonally from a planar surface of the substrate.

The templated substrate can be formed using known photolithographic and etching procedures including soft lithography, such as near-field phase shift lithography, microtransfer molding, solvent-assisted microcontact molding, microcontact printing, and other lithographic microfabrication techniques employed in the semiconductor industry and elsewhere. Direct machining or forming techniques may also be used. Such techniques may include hot embossing, cold stamping, injection moulding, direct mechanical milling, laser etching, chemical etching, reactive ion etching, physical and chemical vapour deposition, and plasma sputtering.

By way of example, the templated substrate can be formed by coating a surface of the substrate with a blanket photoresist layer formed from a photoresist material which is susceptible to radiation induced curing, such as an SU8 layer. The photoresist layer is then exposed to UV radiation through a patterned photomask for selective irradiation of the blanket photoresist layer to form a patterned template on the surface of the substrate. The types of radiation employed on the photoresist material include, but are not limited to, deep ultraviolet (DUV) (i.e. 248 nm) radiation, near ultraviolet (NUV) (i.e. 365 nm) radiation, multiple wavelength flood ultraviolet (UV) radiation, electron radiation, and ion radiation.

The templated substrate is then etched with a plasma etching agent under conditions to form the ordered array of pillars extending substantially orthogonally from a planar surface of the substrate. Conditions for etching quartz or glass are known in the art and can be used in the process described herein. For example, fluorocarbon etching agents, such as CsFs, can be used in an anisotropic plasma etching process. It will be appreciated that the etching time is used to determine the height of the pillars, with a longer etching time resulting in higher pillars for specific plasma conditions.

In addition to the wicking structure, the substrate also comprises an analyte solution loading region. The analyte solution loading region is configured to receive a droplet of the analyte solution such that the droplet is in fluid contact with the wicking structure such that the analyte solution is dispersed within the wicking structure. The volume of the droplet applied need only be large enough to fill the volume of the pillar array in the spectral region. For single droplet measurements, a sample volume of about 2 $\mu$L is sufficient. After placement on the analyte solution loading region, the droplet spontaneously spreads to meet the edge of the pillar array region, which triggers the wicking effect. The film spreads rapidly through the pillar array - typically between 1 and 4 mm/s for $\phi$ = 0.20 and h = 10 $\mu$m. The filled cuvette is then ready for use in spectroscopy.

As mentioned, the cuvette described herein is suitable for optical spectroscopy using an optical spectrometer. Typical optical spectrometers contain a source of radiant energy, a cuvette holder, a device that isolates a restricted region of the spectrum for measurement (e.g., ultraviolet, visible, or infrared), a radiation detector, and a signal processor and readout. Thus, provided herein is an optical spectroscopic method comprising providing a cuvette as described herein, contacting a droplet of an analyte solution to be analysed by optical spectroscopy with part of the wicking structure of the cuvette under conditions to fill the interpillar spacings in the spectral region with the analyte solution to provide a filled cuvette; exposing a first side of the filled cuvette to a light source such that an incident light beam is projected through the spectral region of the cuvette to a detector located at a second side of the filled cuvette that is opposite the first side, or exposing a first side of the filled cuvette to a light source such that an incident light beam passes through the analyte sample in the filled cuvette and is reflected from the substrate to a detector located at the first side of the cuvette; and measuring at least one parameter of the light at the detector. The light source can include monochromatic, multiple wavelengths, single bandpass, broadband, or polychromatic light. The light can be circularly polarised, linearly polarised, elliptically polarised, non-polarised, or selectively polarisable, wherein the polarisation angle and or phase of linearly polarised light may be adjusted. The light source can also include light emitting diodes, organic light emitting diodes, quantum dot light emitting diodes, carbon nanotube LEDs, lasers, tunable lasers, vertical cavity surface emitting lasers, filament lamps, discharge lamps, sunlight, or super luminescent diodes. Other light can include UV, visible, IR, coherent, semi-coherent, incoherent, light selectively filtered by bandpass, multipass, longpass, or shortpass filters, or multiple filters in combination.

The optical spectroscopic method may also include a step of obtaining a reference spectrum. A reference spectrum can be obtained by adding a background solvent to the cuvette, collecting the spectrum, and using it as a baseline for the subsequent measurements. Unlike conventional cuvettes, when the cuvettes described herein are used in optical spectroscopy the incident beam encounters two materials (liquid and substrate material, such as quartz) with different refractive indices and a periodicity that causes diffraction and interference patterns of the incident light. However, we found that the diffraction and interference patterns in the collected reference spectra was reproducible and did not affect the accuracy of subsequent UV-Vis absorbance measurements. Opaque pillars are convenient because the area fraction and transmittance of the pillars and reference samples is irrelevant. However, transparent and semitransparent pillars can also be used, provided that a stray light correction is applied.

To obtain a spectrum, a droplet of analyte solution is placed in the analyte solution loading region. After placement of the droplet of analyte solution, liquid wicks into the wicking structure and, hence, the spectral region and a sharp spike in absorbance may be observed due to the curvature of the leading meniscus. Thereafter, the absorbance may decrease again and begin to rise linearly after that due to steady evaporation of the solvent from the cuvette. The evaporated solvent is immediately replaced by fresh analyte solution from the droplet to maintain the liquid film in the pillar array. The evaporation rate is constant and, on the timescales of the measurement, diffusion of analyte from the pillar array to the droplet is negligible so that the change in concentration is linear and can be used for measurement of unknown samples.

In the embodiment shown in Figure 3, the pillars and the substrate itself are optically transparent in the spectral region. In these embodiments, the cuvette is used in an optical spectrometer with incident light directed parallel to the direction in which the pillars extend from the substrate. When the ordered array of pillars is filled with liquid the curvature of the meniscus profile of the liquid at the top of each interpillar spacing is small. This means that the path length through the sample is substantially the same as the height of the pillars. In use, the liquid neither engulfs the tops of the pillars nor fills part way up the pillars, ensuring that capillary filling of the cuvette is reproducible between measurements.

Thus, using the cuvettes described herein provides a reliable, dilution-free method for UV-Vis analysis of high concentration or high $\varepsilon$ samples in both organic and aqueous phases.

## EXAMPLES

*Solution Preparation*

A platinum solution was prepared by dissolving sodium hexacholoroplatinate (IV) from Johnson Matthey in 0.5 M HCl. The concentration of the prepared stock solution was 24 g/L $Pt^{4+}$. This solution was used to prepare the different dilutions.

*Cuvette Fabrication*

A pillar cuvette with transparent pillars was prepared using UV-photolithography and plasma etching on optical grade quartz. The quartz substrate was polished 4" diameter, 700 $\mu$m thick wafer (Shin-Etsu). The wafer was dehydrated by heating to 200°C, then cooled to room temperature to spin-coat (Suss Microtec, Delta 80RC) SU8-10 photoresist. The sample was then pre-baked, exposed to UV at 365 nm (EVGroup, EVG 620) through a chrome-on-glass photomask (Optofab, Australian National Fabrication Facility). The photoresist was developed and hard baked at 200°C. The backside of the substrate was sputter coated (HHV/Edwards TF500) with a chromium layer to enable adhesion to the electrostatic chuck in the plasma etching tool (ULVAC 570NLD). Anisotropic plasma ($C_3F_8$) etching was used to replicate the SU8 structure in the quartz wafer. The wafer was diced and the photoresist removed by ashing in a furnace at 550°C. Some residue remained at the centre of the top of the pillars but this had no adverse effect on wicking or the performance of the cuvette.

For opaque pillars, the wafer was first sputter-coated with an approximately100 nm thick layer of Cr and an approximately 50 nm layer of Au in a vacuum ($2 \times 10^{-5}$ mbar). The etching procedure described in the preceding paragraph was then followed. Finally, the photoresist was removed by etching the Au layer using 4:1 of KI/I$z$ in water, then washed using Piranha solution (7:3 ratio of 98% $H_2SO_4$ and 30% $H_2O_2$) at room temperature.

The pillars were cylindrical because pinning effects are reduced compared to other geometries with vertical edges.[13] Four projected surface area fractions of the pillars, $\phi$, were used, where w (w = 10 $\mu$m) and d are the pillar diameter and lattice spacing of the array, respectively. Figure 2 shows the arrangement of the pillars (square lattice) with relevant dimensions labelled and scanning electron microscopy (SEM) images for three different area fractions. For low coverages, i.e., $\phi$ = 0.05 and 0.10, the pillars are resolved well; however, as the lattice spacing of the pillars reduces, so do interstitial defects. These imperfect pillar arrays were also used to determine how sensitive the analysis is to the quality of the surface structure.

Two sets of samples were prepared with nominal pillar heights, h, at 10 and 20 $\mu$m. However, in practice, the pillar height varies (for fixed etch time and plasma conditions) depending on the aspect ratio of the etched region, $\dfrac{h}{d-w}$, such that the rate of etching is slower for pillar arrays with smaller *d*. Thus, the different pillar arrays had slightly different heights (Table 1) but the fabrication of the pillar cuvettes was reproducible for a fixed $\phi$, *w*, and *d*. Height measurements on 10 different locations on a single pillar array ($\phi$ = 0.20; $h$ = 10 $\mu$m) gives a representative uncertainty in the pillar height of $\pm$0.33 $\mu$m, or 3 %.

Table 1 - Actual plasma etch depths (pillar heights) for pillar arrays at different projected surface area fractions, $\phi$, and different nominal etch depths, $h_n$.

| $\phi$ | Actual pillar height $h$ ($\mu$m) | |
|---|---|---|
| | $h_n$ = 10 $\mu$m | $h_n$ = 20 $\mu$m |
| 0.05 | 13.3 | 26.1 |
| 0.10 | 12.5 | 24.1 |
| 0.20 | 11.1 | 20.6 |
| 0.30 | 10.2 | 20.0 |

*Spectroscopy*

For all spectroscopic measurements an Ocean Optics DT-Mini-2 light source and Ocean Optics QE65000 detector were used. The light source and detector are compact and easily coupled with lab-on-a-chip platforms for application in remote locations.

*Results and Discussion*

A conventional 2 mm path length quartz cuvette was used for comparison with the pillar-cuvette measurements. The molar absorptivity, $\varepsilon$, at 259 nm for PtCl$_6^{2-}$ complex in the aqueous phase was found to be very high ($2.055 \times 10^{-3}$ m$^2$/mol) so that the measurable concentration range is limited to values less than ~ 50 ppm in this cuvette. Industrial processing and refining of precious metals, including platinum, is carried out at much higher concentrations. For example, platinum concentrations in excess of 20 g/L are common in refinery solutions. Analysis using UV-vis would therefore require pre-dilution factors of up to 1000. These dilutions are not only time-consuming. Large amounts of solvent (here, a 0.5 M HCl aqueous solution) are required even for microvolume aliquots of sample; 100 μL sample requires 100 ml of solvent for a single measurement. The additional sample handling may also lead to greater analytical uncertainty.

*Capillary Filling*

The UV-Vis spectroscopy analysis using the pillar-cuvette proceeds as follows. The pillar cuvette is cleaned with a wash bottle with water and or ethanol and dried with compressed air before a single droplet of neat sample was placed immediately adjacent to the pillar array. The applied volume is unimportant for the operation of the cuvette and UV-Vis measurements. In fact, partially dipping a pillar-cuvette into a bulk liquid will give the same results. However, for the single droplet measurements carried out, the sample volume is ~ 2 μL. This is 50 times less than that required for accurate dilution, no additional solvent is required, no special dispensing equipment is required (e.g., a micro-pipette), and loading and rinsing the pillar cuvette takes only a few seconds. After placement, the droplet spontaneously spreads to meet the edge of the pillar array region, which triggers the wicking effect. The film spreads rapidly through the pillar array - typically between 1 and 4 mm/s for $\phi = 0.20$ and $h = 10$ μm, based on high-speed microscopy - and is dependent on the viscosity of the liquid and the distance travelled as predicted by Washburn for capillary filling of porous media.[10]

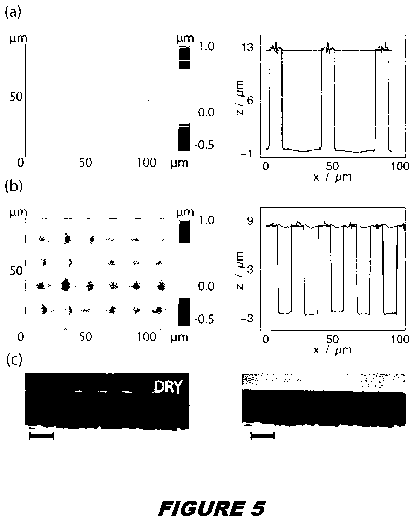

Once the pillar array was filled with the sample, we used optical profilometry (VEECO, WYKO NT9100) to characterise the morphology of the liquid-vapour interface. Figure 5 shows the meniscus profiles for $\phi = 0.05$ and 0.20, with the line scans for the empty pillar arrays shown for comparison. The curvature of the meniscus profile is small, i.e., ~ 300 nm (within the uncertainty of the etch depth), leading to a negligible change in the actual path length. It is important to note that the liquid neither engulfs the tops of the pillars nor fills part way up the pillars, ensuring that capillary filling of the cuvette is reproducible between measurements. Thus, the meniscus curvature is consistent between measurements, so that the precision of the measurements is unaffected. The meniscus morphology was found to be stable for long periods of time, provided the volume of the droplet was in excess of the interstitial volume of the pillar array. The excess liquid in the placed droplet acts to continuously replenish the film of liquid in the pillar cuvette as evaporation occurs. For a typical droplet volume, the meniscus morphology is maintained for tens of seconds.

*Spectroscopy*

Accurate UV-Vis absorbance measurement requires a reliable reference spectrum. The reference spectrum is obtained by adding the background solvent to the cuvette, collecting the spectrum, and using it as a baseline for the subsequent measurements. As discussed, filling the pillar cuvette is reproducible in terms of film thickness and meniscus morphology; however, unlike conventional cuvettes, the incident beam encounters two materials (liquid and quartz) with different refractive indices and a periodicity that causes diffraction of the incident light. Solving for the diffraction pattern is complex; however, the nature of the diffraction pattern in the collected reference spectra was reproducible and did not affect the accuracy of the UV-Vis absorbance measurements. Figure 5 shows the effect of diffraction on the reference spectra with and without solvent (0.5 M $HCl_{(aq)}$) present. The number of peaks increases with increasing difference between the refractive index of the quartz and the liquid or vapour, while the peak intensity increases with increasing $\phi$. The results are off-set with respect to the absorbance axis for clarity.

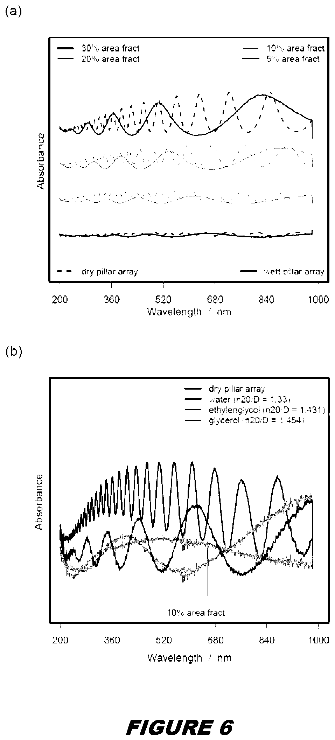

Using the reference spectrum of 0.5 M $HCl_{(aq)}$, we proceeded to test the analytical performance of the pillar cuvette using $PtCl_6^{2-}{}_{(aq)}$ solutions. The absorbance at 259 nm was collected from before droplet placement until sufficient data was collected for analysis. After placement of the droplet of sample, the measured absorbance remained at zero until the wicking liquid reached the detection area of the pillar array and a sharp spike in absorbance was observed, Figure 6. This spike may be due to the curvature of the leading meniscus, which refracts the incident light away from the detector, or a transient concave curvature of the liquid-vapour interface between the pillars. Within seconds, the absorbance decreases again and begins to rise linearly over tens of seconds. The linear increase in absorbance is due to steady evaporation of the solvent from the pillar array. The evaporated solvent (which selectively leaves behind non-volatile $PtCl_6^{2-}$) is immediately replaced by fresh sample from the droplet to maintain the liquid film in the pillar array. The evaporation rate is constant, due to the very well defined geometry of the film, and therefore the change in concentration is linear. Here, we assume that the volume of the excess droplet is sufficiently large so that evaporation from that droplet has a negligible effect on concentration (volume of the film roughly 0.5 μL for $\phi = 0.10$ and $h_n = 10$ μm) and that diffusion of analyte from the pillar array to the droplet is negligible. Fitting the data within the region denoted by the dotted lines, see Figure 6, then calculating the absorbance at 6 s (first dotted line) based on the best fit (immediately after the pillar cuvette is filled; first dotted line) gives values for standard solutions that are in excellent agreement with Beer's Law and can be used for measurement of unknown samples. This approach ensures that evaporation rates have no influence on the measurements. The method could also be automated using appropriate software so that the user was only required to place the droplet.

*Opaque Pillars*

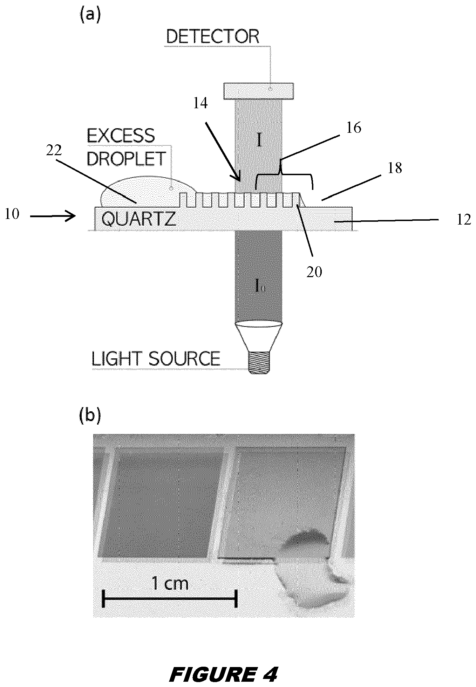

Equation 7 relates the measured transmittance, $T_m$, to the transmittance through the sample, $T_s$, for semitransparent and opaque pillars. For opaque pillars, we recover $T_m = T_s$ and, therefore, the Beer-Lambert law (eq 1). To confirm this experimentally, we prepared pillar arrays with varied $\phi$ with the top surface of the pillars capped by a 100 nm thick Cr layer. The latter made the pillars opaque, that is, $T_p = 0$, while allowing light to pass through the liquid that wicks between the pillars. Table 2 gives the measured dimensions of the pillar cuvettes with opaque pillars, which were used for the spectroscopy measurements presented in this section (see also Figure 4).

**Table 2** - Actual Values of Area Fraction ($\phi$), Pillar Width (w), and Pillar Height (h) for the Cuvettes with Opaque Pillars

| $\phi$ | pillar width, $w \pm 0.2$ ($\mu$m) | lattice spacing, $d \pm 0.2$ ($\mu$m) | pillar height, $h \pm 0.1$ ($\mu$m) |
|---|---|---|---|
| 0.04 | 8.8 | 39.6 | 14.8 |
| 0.08 | 8.8 | 28.0 | 14.4 |
| 0.16 | 8.8 | 19.8 | 13.6 |
| 0.23 | 8.8 | 16.2 | 12.9 |
| 0.31 | 8.8 | 14.0 | 12.2 |
| 0.39 | 8.8 | 12.5 | 11.1 |

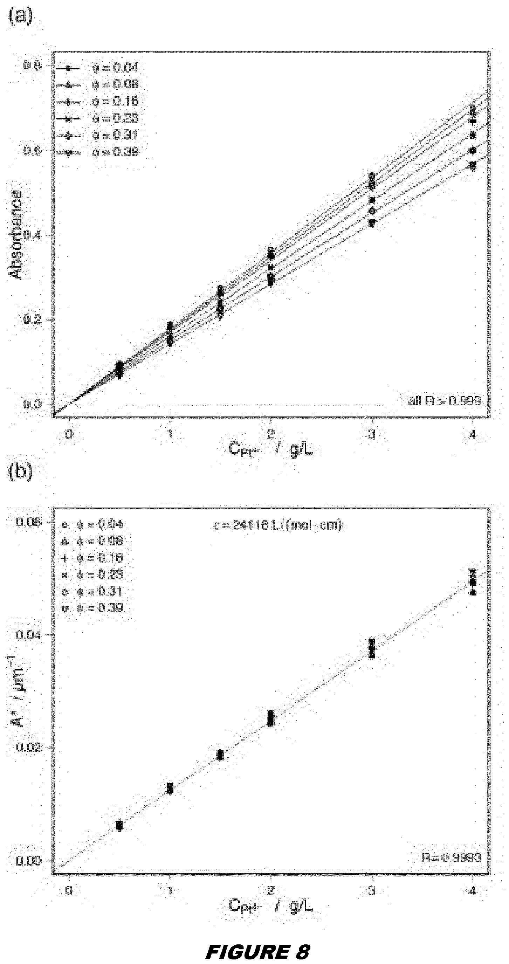

Note that the path length decreases later accounted for by reporting the absorbance normalized by the measured path length (A*). Accurate UV-vis absorbance measurement requires a reliable reference spectrum. The reference spectrum is obtained by adding the background solvent to the cuvette, collecting the spectrum, and using it as a baseline for the subsequent measurements. As shown above, filling the pillar cuvette is reproducible in terms of film thickness and meniscus morphology; however, unlike conventional cuvettes, the incident beam is split into two paths. Since no light can pass through the opaque pillars, an interference pattern results exclusively from light that is transmitted through the liquid. We found that the interference pattern observed for the empty cuvette is reproducible for a given cuvette and, for the filled cuvettes and small $\phi$, the wavelength dependence of the absorbance is not very significant. Regardless of the choice of cuvette, the reference spectra were reproducible and did not influence the accuracy of the UV-vis absorbance measurements. A plot of the transmittance of the cuvette itself (no liquid) against $\phi$ was linear, as expected for opaque pillars. Using the reference spectrum for 0.5 M HCl(aq), we tested the analytical performance of the opaque pillar cuvette using $PtCl_6^{2-}$ (aq) solutions. The absorbance at 259 nm was collected from before droplet placement until sufficient data was collected for analysis. After placement of the droplet of sample, the measured absorbance remained at zero until the wicking liquid reached the detection area of the pillar array and a sharp spike in absorbance was observed. This spike may be due to the curvature of the leading meniscus, which refracts the incident light away from the detector. Within seconds, the absorbance decreased again and began to rise linearly over a relatively long time-scale (tens of seconds). The linear increase in absorbance is due to steady evaporation of the solvent from the pillar array. The evaporated solvent (which selectively leaves behind nonvolatile $PtCl_6^{2-}$) is immediately replaced by a fresh sample from the droplet to maintain the liquid film in the pillar array. The evaporation rate is constant, due to the very well-defined geometry of the film, and therefore, the change in concentration is linear. Here, we assume that the volume of the excess droplet is sufficiently large so that evaporation from that droplet itself has a negligible effect on concentration (the volume of the film is ~0.5 $\mu$L for $\phi = 0.10$ and $h = 10$ $\mu$m) and that diffusion of the analyte from the pillar array to the droplet is negligible over the time scale of the measurement. Fitting the data within the linear region then calculating the absorbance at the intercept of the linear fit with the initial spike (the moment the pillar array is filled) gives values for the standard solutions that are in excellent agreement with the Beer-Lambert Law and can be used for measurement of unknown samples. This approach ensures that evaporation rates have no influence on the measurements. The method could also be automated using appropriate software that detects the initial spike and fits the data, so that the user is only required to place the sample on the pillar-cuvette. Figure 8a shows experimental results for six different pillar cuvettes with varied $\phi$ and each with slightly different path lengths (pillar heights) due to limitations in our etching methodology, see Table 2. All six cuvettes report a linear dependence of absorbance with concentration in agreement with the Beer-Lambert Law, see Figure 8a. The slopes of the best linear fits to the data decrease with increasing $\phi$ due to the decreasing path lengths. When the measured absorbance is normalized (A*) to account for the actual path length (pillar height), all data collapses onto a single line. Based on the collapsed data and eq 1, the molar absorptivity, $\varepsilon$, can be determined (24116 L - $mol^{-1} \cdot cm^{-1}$). This value is in good agreement with $\varepsilon$ determined in this study using 2 mm ($\varepsilon = 23098$ L$\cdot$ $mol^{-1} \cdot cm^{-1}$) and 10 mm ($\varepsilon = 23459$ L$\cdot$ $mol^{-1} \cdot cm^{-1}$) path length conventional cuvettes and reported values. Thus, the optical path lengths appear to be reasonably well defined by the pillar etch depths; however, for alternative geometries, including tapered pillars, an "effective path length" may be more relevant.

*Semi-transparent Pillars*

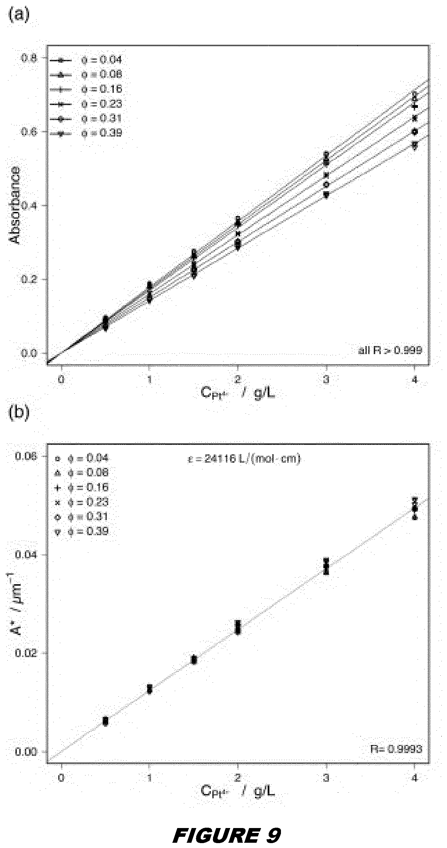

The preparation of quartz pillar cuvettes with opaque pillars requires the additional step of metal deposition and etching compared with bare quartz pillars. We sought to eliminate these steps by studying cuvettes with transparent quartz pillars. This was achieved by etching the Cr layer from the tops of the opaque pillars used previously, followed by hydrofluoric acid etching to remove residues and clean the surface. The etching reduced the pillar width slightly ($w$ = 5.8 μm). Thus, the actual $\phi$ ranged from 0.02 to 0.17, see Figure 9, with no change in the lattice constant or pillar height (refer to Table 2). The pillars are semitransparent and the measured transmittance, $T_m$, through the cuvette containing a liquid sample is theoretically predicted by eq 7. The input parameters are $\phi$, $T_p$, $T_r$, and $T_s$, of which $\phi$ is known and $T_r \approx 1$ for water at the relevant wavelength (259 nm). For quartz, $T_p$ is expected to be relatively high; however, the transmittance of the pillars is likely to be reduced due to increased scattering, for example, due to roughness, finite wall angle (typically 87-90°), or imperfections in the fabrication. Thus, we are left with two unknowns in eq 7: $T_p$ and $T_s$. $T_p$ and $\phi$ are critically important due to the effect of stray light on absorbance spectroscopy. Where $T_p$ and $\phi$ are large, stray light can dominate the transmission causing departure from linearity. The effect of $\phi$ is clearly revealed in the experiments (Figure 9a). Absorbance is plotted for various pillar cuvettes ($\phi$ = 0.02 to 0.17). For the smallest area fraction, $\phi$ = 0.02, the departure from linearity is barely noticeable; however, for $\phi$ = 0.17, the measured absorbance is much lower over the full range of concentrations. While this is undesirable, it differs from a conventional "stray light" effect because it can be quantitatively accounted for using eq 7. Conveniently, we have independently determined $T_s$ using the cuvettes with opaque pillars, for which $\phi$, $T_p$, and $T_r$ are unimportant. Using the experimentally derived $T_s$ (opaque pillars) and assuming $T_p$ = 0.60 and $T_r$ = 1, we arrive at the predicted curves for pillar cuvettes with semitransparent pillars shown in Figure 9a. The prediction is in good agreement with the measurements, especially at concentrations up to ~4 g/L. The only "fitting" parameter in this comparison is $T_p$; however, as is shown below, this value can be independently verified from experiment. The transmittance of the liquid sample alone, $T_s$, can be obtained by rewriting eq 7:

$$T_s = T_m + \frac{\phi}{1-\phi} \cdot \frac{T_p}{T_r} \cdot (T_m - 1) \qquad (9)$$

For a given path length, reference liquid and cuvette material, $(T_p/T_r)$ is constant, and therefore, the prefactor $((\phi/(1 - \phi)) \cdot (T_p/T_r))$ in eq 9 varies with $\phi$ alone. Furthermore, for measurements of a single sample using any two cuvettes with distinct values of $\phi$, the constant $(T_p/T_r)$ can be determined from $T_m$, because $T_s$ is unchanged for a given path length. Based on the results presented in Figure 9a and $Tr$ = 1, we find that $T_p$ = 0.60. Since A = -log $T_s$ increases linearly with concentration and $T_s$ is independent of cuvette design, a plot of A* (A normalized by the path length) against platinum concentration provides a validation of eqs 7 and 9. Figure 9b is a strong validation that pillar cuvettes with semitransparent pillars can be successfully used for absorbance spectroscopy of high ε samples (up to 3-4 g/L of platinum in this study), despite the "stray light", which travels through the pillars to the detector.

*In-situ Filtration of Particles*

We also considered the case where microscopic particles are present in the sample and adversely affect the UV-Vis measurement. Particles obstruct the incident light, shifting the baseline and, in some cases, may absorb or emit light at the same wavelength at the target analyte. Filtration or sedimentation requires additional materials and time. However, the pillar cuvette provides the opportunity to filter microscale particles in-situ, without any additional sample handling. Aqueous $PtCl_6^{2-}$ (3 g/L Pt(IV) for the pillar array and 30 ppm Pt(IV) for the 2 mm cuvette) solutions were spiked with 6 μm polystyrene spheres (Polysciences Inc.) and collected the UV-Vis spectra in both types of cuvette. Figure 9(c) shows an image of the pillar array close to the edge where the solution began wicking into the pillars. The polystyrene particles clearly are arrested by the pillar array during the capillary flow, leaving the filtered solution free to travel into the detection zone of the array. The spectra for the two types of cuvette with and without particles added clearly show that the simple one-step analysis is highly effective, Figure 9(a-b).

*Conclusion*

We used micro pillar structures as a convenient and reliable way to form 10 and 20 μm thick liquid films for UV-vis spectroscopy analysis. The film thickness is precisely controlled by the height of pillars and filling of the 'pillar cuvettes' is spontaneous, driven by capillarity. We chose hexachloroplatinate (IV) as the analyte, due to the very strong absorbance peak at 259 nm. The microscale path length of the pillar cuvette allowed us to directly determine the concentration of undiluted samples at concentrations as high as 10 g/L without loss of precision (compared to measuring diluted samples in a conventional 2 mm cuvette). The open structure allows rapid cleaning of the cuvette and reloading. Furthermore, the pillars act to retain microscopic particles, permitting spectroscopic analysis of the liquid phase can be carried out without prior filtration.

Throughout the specification and the claims that follow, unless the context requires otherwise, the words "comprise" and "include" and variations such as "comprising" and "including" will be understood to imply the inclusion of a stated integer or group of integers, but not the exclusion of any other integer or group of integers.

It will be appreciated by those skilled in the art that the invention is not restricted in its use to the particular application described. Neither is the present invention restricted in its preferred embodiment with regard to the particular elements and/or features described or depicted herein. It will be appreciated that the invention is not limited to the embodiment or embodiments disclosed, but is capable of numerous rearrangements, modifications and substitutions without departing from the scope of the invention as set forth and defined by the following claims.

## REFERENCES

The reference to any prior art in this specification is not, and should not be taken as, an acknowledgement of any form of suggestion that such prior art forms part of the common general knowledge.

(1) von Schenck, H.; Falkensson, M.; Lundberg, B. Clinical Chemistry 1986, 32, 526-529.

(2) Zheng, W.; Shan, N.; Yu, L.; Wang, X. Dyes and Pigments 2008, 77, 153-157.

(3) Lichtenthaler, H. K.; Buschmann, C. In Current Protocols in Food Analytical Chemistry; John Wiley & Sons, Inc., 2001.

(4) Adam, C. D.; Sherratt, S. L.; Zholobenko, V. L. Forensic Science International 2008, 174, 16-25.

(5) Yu, Q.; Liu, S.; Zhang, M.; Cai, N.; Wang, Y.; Wang, P. The Journal of Physical Chemistry C 2009, 113, 14559-14566.

(6) Borowsky, J.; Collins, G. E. Analyst 2007, 132, 958-962.

(7) Chin, C. D.; Linder, V.; Sia, S. K. Lab on a Chip 2012, 12, 2118-2134.

(8) Waggoner, P. S.; Craighead, H. G. Lab on a Chip 2007, 7, 1238-1255.

(9) Chow, A. W. AIChE Journal 2002, 48, 1590-1595.

(10) Washburn, E. W. Physical Review 1921, 17, 273-283.

(11) Bico, J.; Thiele, U.; Quéré, D. Colloids and Surfaces A 2002, 206, 41-46.

(12) Wenzel, R. N. Ind. Eng. Chem. 1936, 28, 988.

(13) Semprebon, C.; Forsberg, P.; Priest, C.; Brinkmann, M. Soft Matter 2014, 10, 5739-5748.

## Claims

1.  A cuvette (10) for optical absorption spectroscopy comprising a substrate (12) and a wicking structure (14) in a spectral region (16) on the substrate (12), the substrate (12) being optically transparent in the spectral region (16), the wicking structure (14) comprising an array of pillars (18) extending from a planar surface of the substrate (12) with each pillar (18) in the array being of substantially equal height in the spectral region (16);

    the substrate (12 further comprising an analyte solution (22) loading region on the substrate (12), the analyte solution (22) loading region configured to receive a droplet of the analyte solution (22) such that the droplet is in fluid contact with the wicking structure (14) such that the analyte solution (22) is dispersed within the wicking structure (14), such that interpillar spacings (20) between adjacent pillars (18) in the spectral region (16) are filled with an analyte solution (22) to thereby form a spectral sample of the analyte solution (22) in the interpillar spacings (20) that is suitable for optical absorption spectroscopy;

**characterized in that**

the substrate (12) and the pillars (18) are both formed of glass or quartz;

the height $h$ of each pillar (18) is from about 0.1 micrometre to about 500 micrometres to define an optical path length; wherein the diameter $w$ of each pillar (18) is from about 0.1 micrometres to about 100 micrometres; wherein the surface area fraction $\phi$ of the pillars (18) is from about 0.01 to about 0.50; and wherein the spectral region (16) is a portion of the cuvette (10) comprising the wicking structure (14) that is suitable for optical absorption spectroscopy.

2. The cuvette according to claim 1, wherein the pillars (18) are transparent or semi-transparent, wherein for the semi-transparent pillars $T_p$=0.6, with $T_p$ being the transmittance of the pillars.

3. The cuvette according to claim 1, wherein the pillars (18) are opaque with $T_p$=0, with $T_p$ being the transmittance of the pillars.

4. The cuvette (10) according to any one of claims 1 to 3, wherein the pillars (18) are circular or square in cross section.

5. The cuvette (10) according to any one of claims 1 to 4, wherein the array has a surface area fraction of the pillars of $\Phi$ of at least about 0.05 and a diameter w of 10 micrometers, and the height $h$ of each pillar is about 10 micrometres or about 20 micrometres.

6. The cuvette (10) according to any one of claims 1 to 5 wherein the surface area fraction $\Phi$ of the pillars (18) is about 0.05 or about 0.10 or about 0.20 or about 0.30.

7. The cuvette (10) according to any one of claims 1 to 6, wherein a surface of the substrate (12) and/or pillars (18) that comes into contact with the analyte solution (22) further comprises a functional coating that is able to react or bind an analyte or release a species to generate or enhance an optical signal.

8. The cuvette (10) according to any one of claims 1 to 7, wherein the dimensions of the interpillar spacings (20) are suitable for filtering particulates from the analyte sample.

9. The cuvette (10) according to any one of claims 1 to 8, having an open structure.

10. An optical absorption spectroscopic method comprising:

a) providing the cuvette (10) according to any one of claims 1 to 9;
b) contacting a droplet of an analyte solution (22) to be analysed by optical absorption spectroscopy with part of the open wicking structure (14) of the cuvette (10) under conditions to fill the interpillar spacings (20) in the spectral region (16) with the analyte solution (22) to provide a filled cuvette(10);
c) exposing a first side of the filled cuvette (10) to a light source such that an incident light beam is projected through the spectral region (16) of the cuvette (10) to a detector located at a second side of the filled cuvette (10) that is opposite the first side; and
d) measuring at least one parameter of the light at the detector.

11. A process for producing a glass or quartz cuvette (10) for optical absorption spectroscopy according to any one of claims 1 to 9, the process comprising:

a) providing a substrate (12);
b) forming an array of pillars (18) extending from a planar surface of the substrate (12) with each pillar (18) in the array being of substantially equal height, wherein the height $h$ of each pillar (18) is from about 0.1 micrometre to about 500 micrometres; wherein the diameter $w$ of each pillar (18) is from about 0.1 micrometres to about 100 micrometres; wherein the surface area fraction $\Phi$ of the pillars (18) is from about 0.01 to about 0.50; and
c) forming an analyte solution (22) loading region on the substrate (12), the analyte solution (22) loading region configured to receive a droplet of an analyte solution (22) such that the droplet is in fluid contact with the array of pillars (18) such that the analyte solution (22) is dispersed within the array of pillars (18).

**EP 3 230 714 B1**

**Patentansprüche**

1.  Küvette (10) für optische Absorptionsspektroskopie, umfassend ein Substrat (12) und eine Dochtstruktur (14) in einem Spektralbereich (16) auf dem Substrat (12), wobei das Substrat (12) in dem Spektralbereich (16) optisch transparent ist und die Dochtstruktur (14) eine Anordnung von Säulen (18) umfasst, die sich von einer ebenen Oberfläche des Substrats (12) aus erstreckt, wobei jede Säule (18) in der Anordnung in dem Spektralbereich (16) im Wesentlichen die gleiche Höhe hat;

    wobei das Substrat (12) ferner eine Laderegion für die Analytlösung (22) auf dem Substrat (12) umfasst, wobei die Laderegion für die Analytlösung (22) dazu konfiguriert ist, ein Tröpfchen der Analytlösung (22) zu empfangen, sodass das Tröpfchen in Fluidkontakt mit der Dochtstruktur (14) steht, sodass die Analytlösung (22) innerhalb der Dochtstruktur (14) dispergiert wird, sodass die Säulenzwischenräume (20) zwischen benachbarten Säulen (18) im Spektralbereich (16) mit einer Analytlösung (22) gefüllt sind, um dadurch eine Spektralprobe der Analytlösung (22) in den Säulenzwischenräumen (20) zu bilden, die für die optische Absorptionsspektroskopie geeignet ist;
    **dadurch gekennzeichnet, dass**
    das Substrat (12) und die Säulen (18) beide aus Glas oder Quarz bestehen;
    die Höhe h jeder Säule (18) von etwa 0,1 Mikrometer bis etwa 500 Mikrometer beträgt, um eine optische Pfadlänge zu definieren; wobei der Durchmesser w jeder Säule (18) von etwa 0,1 Mikrometer bis etwa 100 Mikrometer beträgt; wobei der Oberflächenanteil $\Phi$ der Säulen (18) von etwa 0,01 bis etwa 0,50 beträgt; und wobei der Spektralbereich (16) ein Abschnitt der Küvette (10) ist, der die Dochtstruktur (14) umfasst, die für die optische Absorptionsspektroskopie geeignet ist.

2.  Küvette nach Anspruch 1, wobei die Säulen (18) transparent oder halbtransparent sind, wobei für die halbtransparenten Säulen $T_p$=0,6 gilt, wobei $T_p$ die Durchlässigkeit der Säulen ist.

3.  Küvette nach Anspruch 1, wobei die Säulen (18) undurchsichtig sind, wobei $T_p$=0 gilt, wobei $T_p$ die Durchlässigkeit der Säulen ist.

4.  Küvette (10) nach einem der Ansprüche 1 bis 3, wobei die Säulen (18) im Querschnitt kreisförmig oder quadratisch sind.

5.  Küvette (10) nach einem der Ansprüche 1 bis 4, wobei das Array einen Oberflächenanteil der Säulen von $\Phi$ von mindestens etwa 0,05 und einen Durchmesser w von 10 Mikrometern aufweist und die Höhe h jeder Säule etwa 10 Mikrometer oder etwa 20 Mikrometer beträgt.

6.  Küvette (10) nach einem der Ansprüche 1 bis 5, wobei der Oberflächenanteil $\Phi$ der Säulen (18) etwa 0,05 oder etwa 0,10 oder etwa 0,20 oder etwa 0,30 beträgt.

7.  Küvette (10) nach einem der Ansprüche 1 bis 6, wobei eine Oberfläche des Substrats (12) und/oder der Säulen (18), die mit der Analytlösung (22) in Kontakt kommt, ferner eine funktionelle Beschichtung umfasst, die in der Lage ist, einen Analyten zu reagieren oder zu binden oder eine Spezies freizusetzen, um ein optisches Signal zu erzeugen oder zu erhöhen.

8.  Küvette (10) nach einem der Ansprüche 1 bis 7, wobei die Abmessungen der Säulenzwischenräume (20) geeignet sind, Partikel aus der Analyseprobe zu filtern.

9.  Küvette (10) nach einem der Ansprüche 1 bis 8, die eine offene Struktur aufweist.

10. Optisches Absorptionsspektroskopieverfahren, umfassend:

    a) Bereitstellen der Küvette (10) nach einem der Ansprüche 1 bis 9;
    b) Inkontaktbringen eines Tropfens einer durch optische Absorptionsspektroskopie zu analysierenden Analytlösung (22) mit einem Teil der offenen Dochtstruktur (14) der Küvette (10) unter Bedingungen, um die Säulenzwischenräume (20) in dem Spektralbereich (16) mit der Analytlösung (22) zu füllen, um eine gefüllte Küvette (10) bereitzustellen;
    c) Aussetzen einer ersten Seite der gefüllten Küvette (10) einer Lichtquelle, sodass ein einfallender Lichtstrahl durch den Spektralbereich (16) der Küvette (10) auf einen Detektor projiziert wird, der sich an einer zweiten

16

Seite der gefüllten Küvette (10) befindet, die der ersten Seite gegenüberliegt; und

d) Messen mindestens eines Parameters des Lichts an dem Detektor.

11. Verfahren zum Herstellen einer Glas- oder Quarzküvette (10) für die optische Absorptionsspektroskopie nach einem der Ansprüche 1 bis 9, wobei das Verfahren umfasst:

a) Bereitstellen eines Substrats (12);

b) Bilden eines Arrays von Säulen (18), das sich von einer ebenen Oberfläche des Substrats (12) aus erstreckt, wobei jede Säule (18) in dem Array im Wesentlichen die gleiche Höhe hat, wobei die Höhe h jeder Säule (18) von etwa 0,1 Mikrometer bis etwa 500 Mikrometer beträgt; wobei der Durchmesser w jeder Säule (18) von etwa 0,1 Mikrometer bis etwa 100 Mikrometer beträgt; wobei der Oberflächenanteil $\Phi$ der Säulen (18) von etwa 0,01 bis etwa 0,50 beträgt; und

c) Bilden einer Laderegion für die Analytlösung (22) auf dem Substrat (12), wobei die Laderegion für die Analytlösung (22) so konfiguriert ist, dass sie ein Tröpfchen einer Analytlösung (22) empfängt, sodass das Tröpfchen in Fluidkontakt mit dem Array von Säulen (18) steht, sodass die Analytlösung (22) innerhalb des Arrays von Säulen (18) dispergiert wird.

**Revendications**

1. Cuvette (10) pour la spectroscopie d'absorption optique comprenant un substrat (12) et une structure à effet de mèche (14) dans une région spectrale (16) sur le substrat (12), le substrat (12) étant optiquement transparent dans la région spectrale (16), la structure à effet de mèche (14) comprenant un réseau de piliers (18) s'étendant à partir d'une surface plane du substrat (12), chaque pilier (18) du réseau étant de hauteur sensiblement égale dans la région spectrale (16) ;

le substrat (12) comprenant en outre une région de chargement de solution d'analyte (22) sur le substrat (12), la région de chargement de solution d'analyte (22) étant configurée pour recevoir une gouttelette de la solution d'analyte (22) de sorte que la gouttelette soit en contact fluide avec la structure à effet de mèche (14) de telle sorte que la solution d'analyte (22) est dispersée à l'intérieur de la structure à effet de mèche (14), de sorte que les espacements interpiliers (20) entre les piliers adjacents (18) dans la région spectrale (16) sont remplis d'une solution d'analyte (22) pour former ainsi un échantillon spectral de la solution d'analyte (22) dans les espacements interpiliers (20) qui convient à la spectroscopie d'absorption optique ;
**caractérisée en ce que**
le substrat (12) et les piliers (18) sont tous deux formés de verre ou de quartz ;
la hauteur *h* de chaque pilier (18) est d'environ 0,1 micromètre à environ 500 micromètres pour définir une longueur de trajet optique ; dans lequel le diamètre *w* de chaque pilier (18) est d'environ 0,1 micromètre à environ 100 micromètres ; dans laquelle la fraction de surface $\Phi$ des piliers (18) est d'environ 0,01 à environ 0,50 ; et dans lequel la région spectrale (16) est une partie de la cuvette (10) comprenant la structure à effet de mèche (14) qui convient à la spectroscopie d'absorption optique.

2. Cuvette selon la revendication 1, dans laquelle les piliers (18) sont transparents ou semi-transparents, dans laquelle pour les piliers semi-transparents $T_p$ = 0,6, avec $T_p$ étant la transmittance des piliers.

3. Cuvette selon la revendication 1, dans laquelle les piliers (18) sont opaques avec $T_p$ = 0, $T_p$ étant la transmittance des piliers.

4. Cuvette (10) selon l'une quelconque des revendications 1 à 3, dans laquelle les piliers (18) sont de section circulaire ou carrée.

5. Cuvette (10) selon l'une quelconque des revendications 1 à 4, dans laquelle le réseau a une fraction de surface des piliers de $\Phi$ d'au moins environ 0,05 et un diamètre w de 10 micromètres, et la hauteur h de chaque pilier est d'environ 10 micromètres ou d'environ 20 micromètres.

6. Cuvette (10) selon l'une quelconque des revendications 1 à 5 dans laquelle la fraction de surface $\Phi$ des piliers (18) est d'environ 0,05 ou d'environ 0,10 ou d'environ 0,20 ou d'environ 0,30.

7. Cuvette (10) selon l'une quelconque des revendications 1 à 6, dans laquelle une surface du substrat (12) et/ou des piliers (18) qui entre en contact avec la solution d'analyte (22) comprend en outre un revêtement fonctionnel qui est capable de réagir ou de se lier à un analyte ou de libérer une espèce pour générer ou améliorer un signal optique.

8. Cuvette (10) selon l'une quelconque des revendications 1 à 7, dans laquelle les dimensions des espacements interpiliers (20) sont adaptées pour filtrer les particules de l'échantillon d'analyte.

9. Cuvette (10) selon l'une quelconque des revendications 1 à 8, ayant une structure ouverte.

10. Procédé spectroscopique d'absorption optique comprenant :

   a) la fourniture de la cuvette (10) selon l'une quelconque des revendications 1 à 9 ;
   b) la mise en contact d'une gouttelette d'une solution d'analyte (22) à analyser par spectroscopie d'absorption optique avec une partie de la structure à effet de mèche ouverte (14) de la cuvette (10) dans des conditions pour remplir les espacements interpiliers (20) dans la région spectrale (16) avec la solution d'analyte (22) pour fournir une cuvette remplie (10) ;
   c) l'exposition d'un premier côté de la cuvette remplie (10) à une source lumineuse de sorte qu'un faisceau lumineux incident est projeté à travers la région spectrale (16) de la cuvette (10) vers un détecteur situé sur un second côté de la cuvette remplie (10) qui est opposé au premier côté ; et
   d) la mesure d'au moins un paramètre de la lumière au niveau du détecteur.

11. Procédé de fabrication d'une cuvette en verre ou en quartz (10) pour une spectroscopie d'absorption optique selon l'une quelconque des revendications 1 à 9, le procédé comprenant :

   a) la fourniture d'un substrat (12) ;
   b) la formation d'un réseau de piliers (18) s'étendant à partir d'une surface planaire du substrat (12), chaque pilier (18) du réseau étant de hauteur sensiblement égale, dans lequel la hauteur h de chaque pilier (18) est d'environ 0,1 micromètre à environ 500 micromètres ; dans lequel le diamètre w de chaque pilier (18) est d'environ 0,1 micromètre à environ 100 micromètres ; dans lequel la fraction de surface $\Phi$ des piliers (18) est d'environ 0,01 à environ 0,50 ; et
   c) la formation d'une région de chargement de solution d'analyte (22) sur le substrat (12), la région de chargement de solution d'analyte (22) étant configurée pour recevoir une gouttelette d'une solution d'analyte (22) de sorte que la gouttelette soit en contact fluide avec le réseau de piliers (18) de telle sorte que la solution d'analyte (22) soit dispersée à l'intérieur du réseau de piliers (18).

(a)

(b)                                    (c)

*FIGURE 1*

pillar

*FIGURE 2*

**FIGURE 3**

(a)

(b)

*FIGURE 4*

**FIGURE 5**

(a)

(b)

**FIGURE 6**

**FIGURE 7**

*FIGURE 8*

FIGURE 9

(a)

(b)

(c)

**FIGURE 10**

**EP 3 230 714 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- AU 2014905004

- US 20060289787 A1

### Non-patent literature cited in the description

- **SEMPREBON, CIRO et al.** *Soft Matter,* 2014, vol. 10 (31), 5739-5748
- **MAI, TRONG THI et al.** *Langmuir,* 2012, vol. 28 (31), 11465-11471
- **VON SCHENCK, H. ; FALKENSSON, M. ; LUNDBERG, B.** *Clinical Chemistry,* 1986, vol. 32, 526-529
- **ZHENG, W. ; SHAN, N. ; YU, L. ; WANG, X.** *Dyes and Pigments,* 2008, vol. 77, 153-157
- **LICHTENTHALER, H. K. ; BUSCHMANN, C.** In Current Protocols in Food Analytical Chemistry. John Wiley & Sons, Inc, 2001
- **ADAM, C. D. ; SHERRATT, S. L. ; ZHOLOBENKO, V. L.** *Forensic Science International,* 2008, vol. 174, 16-25
- **YU, Q. ; LIU, S. ; ZHANG, M. ; CAI, N. ; WANG, Y. ; WANG, P.** *The Journal of Physical Chemistry C,* 2009, vol. 113, 14559-14566

- **BOROWSKY, J. ; COLLINS, G. E.** *Analyst,* 2007, vol. 132, 958-962
- **CHIN, C. D. ; LINDER, V. ; SIA, S. K.** *Lab on a Chip,* 2012, vol. 12, 2118-2134
- **WAGGONER, P. S. ; CRAIGHEAD, H. G.** *Lab on a Chip,* 2007, vol. 7, 1238-1255
- **CHOW, A. W.** *AIChE Journal,* 2002, vol. 48, 1590-1595
- **WASHBURN, E. W.** *Physical Review,* 1921, vol. 17, 273-283
- **BICO, J. ; THIELE, U. ; QUÉRÉ, D.** *Colloids and Surfaces A,* 2002, vol. 206, 41-46
- **WENZEL, R. N.** *Ind. Eng. Chem.,* 1936, vol. 28, 988
- **SEMPREBON, C. ; FORSBERG, P. ; PRIEST, C. ; BRINKMANN, M.** *Soft Matter,* 2014, vol. 10, 5739-5748